(19)

Europäisches
Patentamt
European
Patent Office
Office européen
des brevets

(11) **EP 4 046 798 A1**

(12) **EUROPEAN PATENT APPLICATION**

(43) Date of publication:
**24.08.2022 Bulletin 2022/34**

(21) Application number: **21158142.6**

(22) Date of filing: **19.02.2021**

(51) International Patent Classification (IPC):
**B32B 43/00** *(2006.01)* **B32B 38/10** *(2006.01)*
**B32B 38/18** *(2006.01)*

(52) Cooperative Patent Classification (CPC):
**B32B 38/10; B32B 38/1858;** B32B 37/02;
B32B 37/20; B32B 2305/34; B32B 2535/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Paul Hartmann AG**
**89522 Heidenheim (DE)**

(72) Inventor: **RODRIGUEZ, Marc**
**08302 Mataró (ES)**

(74) Representative: **Ter Meer Steinmeister & Partner**
**Patentanwälte mbB**
**Nymphenburger Straße 4**
**80335 München (DE)**

(54) **APPARATUS AND METHOD FOR REMOVING AT LEAST ONE LAYER FROM AN ARTICLE STRUCTURE**

(57) The present disclosure relates to an apparatus (100) for removing at least one layer from an article structure (20), comprising: a conveyor device (110) having a support surface (112) configured for supporting the article structure (20); and a delamination arrangement (130) including one or more delamination rolls (120a, 120b) configured for delaminating a protective layer (32) off the article structure (20) by applying a delamination force ($F_{del}$) to the protective layer (32), wherein the delamination force ($F_{del}$) has a first delamination force component ($F_{del,y}$) in a vertical direction (y) and a second delamination force component ($F_{del,x}$) in a horizontal direction (x), and wherein the first delamination force component ($F_{del,y}$) is smaller than a vertical force component ($F_{belt,y}$; $F_{vac,y}$) generated by the conveyor device (110) and acting on the article structure (2) in a direction opposite to the first delamination force component ($F_{del,y}$).

Fig. 2

EP 4 046 798 A1

## Description

## FIELD

Embodiments of the present disclosure relate to an apparatus and a method for removing at least one layer from an article structure. Embodiments of the present particularly relate to the manufacture of wound care articles.

## BACKGROUND

Wound care articles, such as dressings, are sterile articles that can be applied to a wound to promote healing and protect the wound from further damage. A variety of wound care articles are known that can promote healing of various types of acute or chronic wounds, such as cuts, abrasions, blisters of skin tissue, burns or pressure ulcers. Some wound care articles consist of a number of different layers which can be laminated on top of each other in a continuous manner. In particular, an article structure may move along a production line as some layers are added to the article structure and other layers, such as temporary protective layers, are removed. At the end of the production line, the finished product may then be present.

Wound care articles are mass-produced items that are manufactured in large quantities. Therefore, the efficiency and production speed of a manufacturing system is critical to increasing the yield of the manufacturing system. However, at least the removal of the temporary protective layers described above can limit the production speed and thus the yield. In particular, the temporary protective layers may adhere to the remaining article structure and damage the remaining article structure if the temporary protective layers are removed too quickly.

In view of the above, new manufacturing systems for wound care articles that overcome at least some of the problems in the art are beneficial.

## SUMMARY

In light of the above, an apparatus and a method for removing at least one layer from an article structure are provided.

It is an object of the present disclosure to improve the manufacturing of article structures, such as wound care articles. It is another object of the present disclosure to increase a manufacturing speed and a yield of a manufacturing system for article structures, such as wound care articles. Furthermore, a further object is to keep a required quality of the manufactured article structures and the final wound care article, when driving the apparatus for manufacturing with higher speed.

The objects are solved by the features of the independent claims. Preferred embodiments are defined in the dependent claims. Further aspects, benefits, and features of the present disclosure are apparent from the claims, the description, and the accompanying drawings.

According to an independent aspect of the present disclosure, an apparatus for removing at least one layer from an article structure is provided. The apparatus includes a conveyor device having a support surface configured for supporting the article structure; and a delamination arrangement including one or more delamination rolls configured for delaminating a protective layer off the article structure by applying a delamination force to the protective layer.

Preferably, the delamination force has a first delamination force component in a vertical direction and a second delamination force component in a horizontal direction. The first delamination force component is smaller than a vertical force component generated by the conveyor device and acting on the article structure in a direction opposite to the first delamination force component.

According to some embodiments, which can be combined with other embodiments described herein, a delamination angle defined between a direction or vector of the delamination force and the first delamination force component is 10° or higher and/or less than 90°. For example, the delamination angle is 15° or higher, 20° or higher, 25° or higher, 30° or higher, 35° or higher, 40° or higher, or 45° or higher. In any case, the delamination angle may be less than 90°.

According to some embodiments, which can be combined with other embodiments described herein, the support surface is inclined with respect to the horizontal direction by an inclination angle to provide the first delamination force component that is smaller than the vertical force component generated by the conveyor device.

Preferably, the inclination angle may be 45° or less and more than 0°. For example, the inclination angle may be 40° or less, 35° or less, 30° or less, 25° or less, 20° or less, 15° or less, or 10° or less. In any case, the inclination angle may be greater than 0°. In a particular embodiment, the inclination angle may be about 17°.

According to some embodiments, which can be combined with other embodiments described herein, the conveyor device includes a suction mechanism configured to hold the article structure at the support surface by means of a suction force.

Preferably, the vertical force component of the conveyor device includes a vertical component of the suction force.

According to some embodiments, which can be combined with other embodiments described herein, the one or more delamination rolls are two delamination rolls arranged so that the protective layer removed from the article structure is guided between them.

Preferably, the two delamination rolls are arranged above each other in a direction substantially perpendicular to the support surface.

According to some embodiments, which can be combined with other embodiments described herein, the apparatus further includes a speed control arrangement configured to control a moving speed of the delaminated protective layer.

According to some embodiments, which can be combined with other embodiments described herein, the speed control arrangement includes a determination unit having a pair of fixed rolls and a moveable roll arranged in a triangle and configured to guide the delaminated protective layer coming from the conveyor device.

Preferably, the apparatus is configured to perform a control of the speed of the delaminated protective layer based on a position of the moveable roll.

According to some embodiments, which can be combined with other embodiments described herein, the moveable roll is linearly moveable towards the pair of fixed rolls, preferably to a center between the pair of fixed rolls.

In further embodiments, the moveable roll is substantially circularly moveable.

According to some embodiments, which can be combined with other embodiments described herein, the speed control arrangement includes an encoder device configured to determine the position of the moveable roll by detecting a deflection or position of the moveable roll.

According to some embodiments, which can be combined with other embodiments described herein, the speed control arrangement further includes a pair of driven rolls configured to guide and move the delaminated protective layer coming from the determination unit.

Preferably, the pair of driven rolls is configured to control the moving speed of the delaminated protective layer.

Preferably, the pair of driven rolls is a pair of nip rolls.

According to some embodiments, which can be combined with other embodiments described herein, the apparatus further includes a first lamination arrangement configured for laminating a multilayered structure onto the article structure.

Preferably, the first lamination arrangement is further configured for delaminating at least one protective layer off the multilayered structure before the multilayered structure is laminated onto the article structure.

According to some embodiments, which can be combined with other embodiments described herein, the apparatus further includes a second lamination arrangement configured for laminating at least one layer onto the article structure after the protective layer has been delaminated off the article structure by means of the delamination arrangement.

Preferably, the second lamination arrangement includes one or more lamination rolls.

According to some embodiments, which can be combined with other embodiments described herein, the apparatus includes at least one separation device configured to separate, e.g. cut, the article structure into a plurality of articles.

Preferably, the articles are wound care articles, such as wound dressings.

According to some embodiments, which can be combined with other embodiments described herein, the conveyor device is a belt conveyor.

Preferably, the articles structure may include a nonwoven material which is preferably used a carrier or support material.

The nonwoven material may be fully coated with an acrylic coating. At least one or several wound packs may be attached on the acrylic coating. The wound packs may have a predetermined distance in y and/or x direction to the next wound pack. These components may form the article structure described above.

This article structure may be transported on the conveyor in a continuous band form having wound packs being spaced apart from each other on the nonwoven material in a row.

The article structure may also have sheet form having several rows and columns of wound packs attached thereon.

The article structure may by coated with the multilayered structure, e.g. Acrysil ™ .

The multilayered structure may have at least one single center layer, e.g. a PU layer being covered on one side facing the article structure with an acrylic coating. Thereby the acrylic coating of the multilayered structure and the acrylic coating of the article structure, e.g. on the nonwoven material may form a strong connection which provides a reliable attachment of the two material layers , i.e. the article structure and the multilayered structure.

As the multilayered structure is separately manufactured it needs to be laminated onto the article structure. The multilayered structure which may be at least one PU layer having on both side surfaces a coating, may be covered on one or both coatings with protection layers. As the protection layers are only attached temporally on the PU layer being coated with an adhesive coating, the protective layer needs to be removed before fixedly attaching the multilayered structure on the article structure. As the surface of the PU layer facing the article structure side and the wound pack side is coated with an acrylic coating, the protection layer is a siliconized paper, which might be easily removed before laminating the PU layer with it exposed acrylic coating to the acrylic coating on the nonwoven material.

The opposing side of the PU layer may be coated with a siliconized coating. To allow an easy removing or delaminating of the protective layer on this side of the multilayered structure, the protective layer is preferably a PE film, which provides sufficient protection during transport and manufacturing, but which might be easily removed from the siliconized coating.

The manufacturing system or apparatus might be supplied with one or more article structure bands being transported in parallel on the conveyor and maybe processed simultaneously by the lamination and delamination stages.

As indicated above, alternatively, it might be possible to provide a larger sheet also as a continuous band or sheet having a two dimensional arrangement of wound packs thereon. So, there are several wound packs on one sheet of nonwoven material in x and y direction being spaced apart from each other.

Thus, the lamination of the multilayered structure including the delamination of the protection layer is performed over several rows of wound packs. Also, the delamination of the other protective layer from the multilayered structure may be made in a larger width, e.g. over the full width of the conveyor. Thus, the protective layer on the multilayered structure in several parallel rows of wound packs might be simultaneously removed or delaminated.

The same applies for the final lamination of the liner, which might be the last station on the conveyor.

Finally, the sheet of finalized plasters of wound dressings might be separated in x and y direction to provide e.g. a plurality of single plasters.

According to another independent aspect of the present disclosure, a method for removing at least one layer from an article structure is provided. The method includes applying a delamination force to a protective layer of the article structure using one or more delamination rolls while the article structure is supported on a support surface of a conveyor device.

The delamination force has a first delamination force component in a vertical direction and a second delamination force component in a horizontal direction. The first delamination force component is smaller than a vertical force component generated by the conveyor device and acting on the article structure in a direction opposite to the first delamination force component.

In another aspect of the disclosure, an apparatus is provided for removing at least one layer from an article structure is provided. The apparatus includes a conveyor device having a support surface configured for supporting the article structure; and a delamination arrangement including one or more delamination rolls configured for delaminating a protective layer off the article structure by applying a delamination force to the protective layer. The conveyor device having a support surface being inclined with respect to a horizontal direction. The apparatus includes a speed control arrangement for controlling the speed of the delamination to thereby control the delamination of the protective layer from the article structure.

This other aspect can be combined with any of the above mentioned optional features.

Embodiments are also directed at systems/apparatuses/devices/means for carrying out the disclosed methods and include system/apparatus/device/means aspects for performing each described method aspect. These method aspects may be performed by way of hardware components, a computer programmed by appropriate software, by any combination of the two or in any other manner. Furthermore, embodiments according to the disclosure are also directed at methods for operating the described apparatus. The disclosure includes method aspects for carrying out every function of the apparatus for removing at least one layer from an article structure.

According to another independent aspect of the present disclosure, a manufacturing system for wound care articles is provided. The manufacturing system includes the apparatus for removing at least one layer from an article structure according to the embodiments of the present disclosure.

## BRIEF DESCRIPTION OF THE DRAWINGS

For understanding the manner above recited features of the present disclosure in detail, a more particular description of the disclosure, briefly summarized above, is provided with reference to embodiments. The accompanying drawings relate to embodiments of the disclosure and are described in the following:

FIG. 1A shows a cross-sectional view of an article structure according to embodiments described herein;

FIG. 1B shows a top view of the article structure of FIG. 1A;

FIG. 1C shows a top view of a further exemplary article structure;

FIG. 2 shows a schematic view of an apparatus for removing at least one layer from an article structure according to embodiments described herein;

FIG. 3 shows a perspective view of an apparatus for removing at least one layer from an article structure according to embodiments described herein;

FIG. 4A shows forces in an apparatus for removing at least one layer from an article structure according to embodiments described herein; and

FIG. 4B shows forces in an apparatus for removing at least one layer from an article structure according to further embodiments described herein.

## DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

As described above, wound care articles are mass-produced items that are manufactured in large quantities. Therefore, the efficiency and production speed of a manufacturing system is critical to increasing the yield of the manufacturing system. However, at least the removal of the temporary protective layers can limit the production speed and thus the yield. In particular, the temporary protective layers may adhere to the remaining article structure and damage the remaining article structure if the temporary protective layers are removed too quickly.

The embodiments of the present disclosure overcome the above drawbacks by adjusting a delamination force used to peel a temporary protective layer from the article structure. In particular, the delamination force is adjusted so that the article structure adheres to the support surface of the conveyor and does not lift off. Accordingly, the production speed and thus the yield of a manufacturing system can be increased.

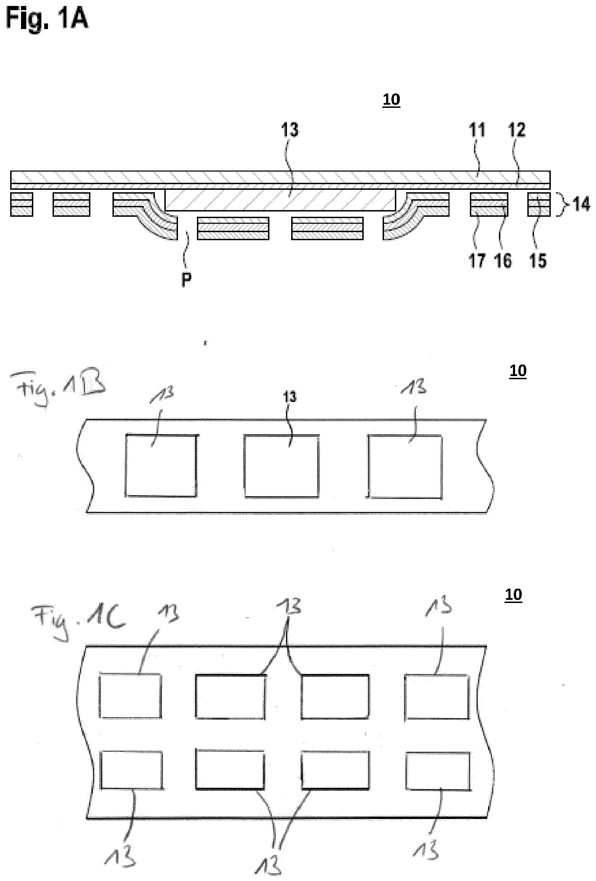

According to some embodiments, which can be combined with other embodiments described herein, the article structure is used to manufacture wound care articles, such as wound dressings. Wound care articles often comprise a multilayered structure laminated one on top of the other. An exemplary wound care article is shown in FIGs. 1A, 1B and 1C.

FIG. 1A shows a cross-sectional view of a wound care article 10 according to embodiments described herein. FIG. 1B shows a top view of the wound care article 10 of FIG. 1A. 1C shows a top view of an alternative configuration of the wound care article structure used to manufacture the wound article 10 of FIG. 1A.

The wound care article 10 may include a carrier 11. The carrier 11 may define a side of the wound care article 10 facing away from the wound and forms an outer visible side or covering of the wound care article 10. The term "carrier" as used herein shall particularly embrace flexible carriers. In some implementations, the carrier 11 may include, or consist of, a non-woven fabric or any other suited material, which can carry or support the wound packs and can serve finally as cover layer when the wound is applied to the skin of the body. Usually the carrier 11 is permeable to vapour but impermeable to liquids.

The wound care article 10 further includes a wound pad 13 over or on the carrier 11. The wound pad 13 may include an absorbent material that is able to absorb liquids from the wound. The wound pad 13 can include, or consist of, any material suitable for this purpose and can contain, for example, a foam, absorbent fibers, a textile material, a gel or absorbent particles or any combination thereof.

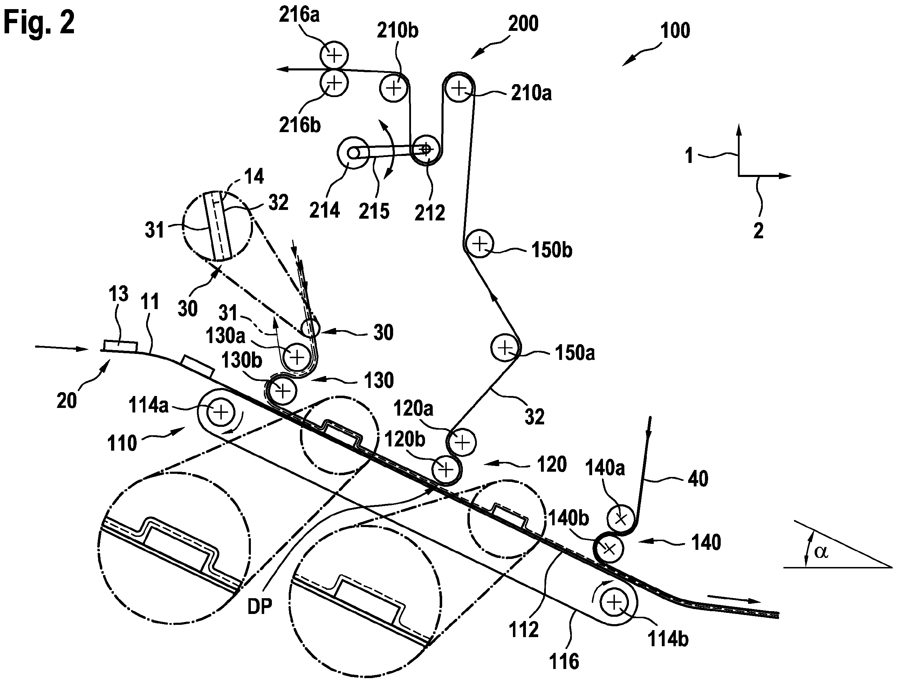

The article structure 20 may be a continuous article structure on which a plurality of wound pads 13 are arranged in series with a predetermined distance therebetween. In the example of FIG. 1B, one single line of wound pads 13 is provided e.g. along the x-direction defined in FIG. 2. In another example, as is shown in FIG. 1C, a two-dimensional matrix of wound pads 13 is arranged in x-direction and y-direction. The sheet of finalized wound care articles, such as plasters, can be separated in x direction and y direction to provide a plurality of individual wound care articles.

In some implementations, the wound care article 10 includes at least one intermediate layer 12 arranged between the carrier 11 and the wound pad 13. The intermediate layer 12 may be configured to attach the wound pad 13 to the carrier 11. For example, the intermediate layer 12 may be an adhesive layer, such as an acrylic layer or acrylic coating.

A multilayered arrangement 14 may be provided over or on the carrier 11 and the wound pad 13. The multilayered arrangement 14 may define a side of the wound care article 10 facing towards the wound. At least one layer of the multilayered arrangement 14 may contact the wound and/or the skin tissue surrounding the wound. The multilayered arrangement 14 may be configured to adhere the wound care article 10 to the wound and/or the skin tissue surrounding the wound.

In some embodiments, the multilayered arrangement 14 may have openings or perforations P such that fluids can pass from the wound into the wound pad 13. The openings or perforations P can be distributed irregularly over the surface of the multilayered arrangement 14 or be arranged in regular patterns.

In the example of FIG. 1A, the multilayered arrangement 14 has three layers. However, the present disclosure is not limited thereto and the multilayered arrangement 14 may have two layers or more than three layers. In other embodiments, the multilayered arrangement 14 can be omitted and a single layer can be provided instead.

The multilayered arrangement 14 may have a first layer 15, a second layer 16 and a third layer 17.

The first layer 15 may be configured to adhere the multilayered arrangement 14 to the wound pad 13 and/or the carrier 11 and/or the intermediate layer 12. For example, the first layer 15 may be an acrylic adhesive layer or acrylic adhesive coating, in particular an adhesive medical acrylic layer or adhesive medical acrylic coating.

The second layer 16 may be an intermediate layer, such as a polyurethane (PU) layer or PU coating.

The third layer 17 may be a contact layer configured to contact the wound and/or skin surrounding the wound. In particular, the third layer 17 may be configured to adhere the wound care article 10 to the wound and/or the skin. In some embodiments, the third layer 17 may be a silicone coating or silicone layer, such as a soft tack silicone gel coating or layer.

In some embodiments, the multilayered arrangement 14 may be Acrysil ™.

A release liner (not shown) may be provided over the multilayered arrangement 14. The release liner may be removed to expose the third layer 17 before the wound care article 10 is attached to a body.

Typically, when reference is made to the term "over", i.e., one layer being over the other, it is understood that, starting from the carrier, a first layer is deposited over the carrier, and a further layer, laminated after the first layer, is thus over the first layer and over the carrier. In other words, the term "over" is used to define an order of layers, layer stacks, and/or coatings wherein the starting point is the carrier. This is irrespective of whether the wound care article is depicted upside down or not.

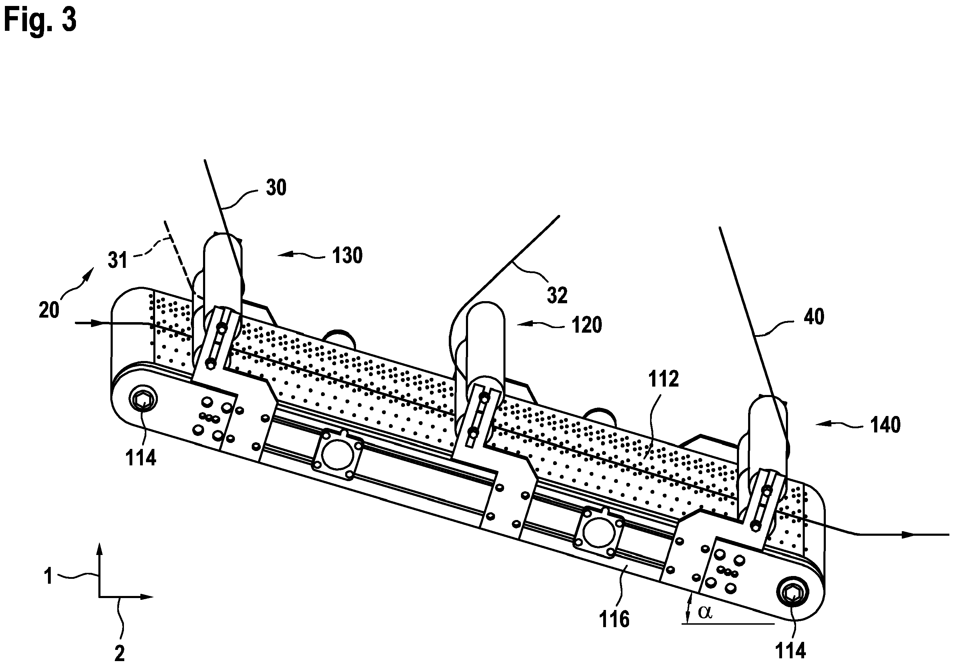

FIG. 2 shows a schematic view of an apparatus 100 for removing at least one layer from an article structure 20 according to embodiments described herein. FIG. 3 shows a perspective view of the apparatus 100 of FIG. 2. The apparatus 100 may be used in the manufacture of wound care articles, such as wound dressings, and may be part of a larger production line.

The apparatus 100 includes a support surface 112 configured for supporting the article structure 20. The support surface 112 may be an essentially flat support surface of the conveyor device 110. The conveyor device 110 may be configured for moving the article structure 20 along a transport path, in particular along an essentially linear transport path.

In some embodiments, the article structure 20 may be a continuous structure which is cut at the end of the manufacturing process into a plurality of individual wound care articles. In particular, the article structure 20 may move along a production line including the apparatus 100 as some layers are added to the article structure and other layers, such as temporary protective layers, are removed. At the end of the production line, the finished product may then be present. Accordingly, it should be understood that the composition of the article structure 20 changes in the course of production, because layers are removed while others are added.

In some embodiments, the conveyor device 110 may include a belt 116 which provides the support surface 112. In this case, the conveyor device 110 may be a belt conveyor. The belt 116 may be movable to transport the article structure 20 along the transport path. In some implementations, the conveyor device 110 can include one or more conveyor rolls, such as a first conveyor roll 114a and a second conveyor 114b, configured to move the belt 116. The conveyor rolls may be rotatable around respective rotational axes to move the belt 116 for a transportation of the article structure 20 along the transport path. The rotational axes of the conveyor rolls may be substantially horizontally oriented rotational axis.

As used in the present disclosure, the horizontal direction is the direction perpendicular to the vertical direction. The vertical direction is parallel to gravity.

According to some embodiments, which can be combined with other embodiments described herein, the conveyor device 110 includes a suction mechanism (not shown) configured to hold the article structure 20 at the support surface 112 by means of a suction force. For example, a plurality of vacuum ports may be formed in the support surface 112 to apply a vacuum or underpressure on a side of the article structure 20 to adhere the article structure 20 to the support surface 112. In some implementations, the suction force is created by use of a vacuum source (not shown) coupled to the vacuum ports in the support surface 112.

As is shown in FIG. 2, the article structure 20 enters the apparatus 100 at a first side of the apparatus 100, is processed and exits the apparatus 100 at a second side opposite the first side with respect to the transport path of the article structure 20. The processing of the article structure 20 is explained in the following.

The article structure 20 entering the apparatus 100 may already include the carrier 11 and the wound pad 13 of the wound care article shown in FIGs. 1A and 1B. The carrier 11 and the wound pad 13 may be attached to each other by means of an intermediate layer (not shown), such as an acrylic layer or acrylic coating.

The apparatus 100 may be configured to laminate a multilayered structure 30 on the article structure 20 using a first lamination arrangement 130. The multilayered structure 30 may include the multilayered structure 14 shown in FIG. 1A and may initially have protective layers 31, 32 on each side thereof. In particular, the multilayered structure 30 may have a first protective layer 31 on a first side thereof and a second protective layer 32 on a second side thereof. The first side of the multilayered structure 30 may be a side facing towards the article structure 20, in particular the carrier 11.

The first lamination arrangement 130 may be configured to remove at least one protective layer from at least one of the sides of the multilayered structure 30 before the multilayered structure 30 is laminated onto the article structure 20. For example, the first lamination arrangement 130 may be configured to remove the first protective layer 31 from the first side of the multilayered structure 30 which faces the article structure 20 before the multilayered structure 30 is laminated onto the article structure 20.

Referring to FIG. 1A, the protective layer 31 may cover and protect the first layer 15, such as an acrylic layer or acrylic coating, used to adhere the multilayered structure 30 to the article structure 20. After the protective layer 31 has been removed from the multilayered structure 30, the first lamination arrangement 130 may then apply the multilayered structure 30 to the article structure 20. The protective layer 31 might be a siliconized protection layer or siliconized paper.

According to some embodiments, the first lamination arrangement 130 may include two or more rolls, such as a first roll 130a and a second roll 130b, configured to laminate the multilayered structure 30 onto the article structure 20. Optionally, the two or more rolls may be configured to remove the at least one protective layer, such as the first protective layer 31, from the multilayered structure 30 before the multilayered structure 30 is laminated onto the article structure 20.

The first roll 130a might be designated as bottom roller which could have a surface of rubber and/or foam to adapt to the thickness of the laminating surface of the article structure. The second roll 130b might have a different surface to reliable transfer the delaminated protection layer.

For example, the first roll 130a and the second roll 130b may define a space or gap therebetween. The at least one protective layer, such as the first protective layer 31, may be removed from the multilayered structure 30 at a position behind the first roll 130a, wherein it is then wound around the first roll 130a to pass through the gap between the first roll 130a and the second roll 130b.

Preferably, the first roll 130a and the second roll 130b are arranged above each other in a direction substantially perpendicular to the support surface 112. The term "substantially perpendicular" relates to a substantially perpendicular orientation of a line on which the first roll 130a and the second roll 130b are arranged, wherein a deviation of a few degrees, e.g. up to 5° or even up to 10°, from an exact perpendicular orientation is still considered as "substantially perpendicular".

Each of the two or more rolls, such as the first roll 130a and the second roll 130b, may have a respective rotational axis. The rotational axes of the two or more rolls may be substantially parallel to each other. The term "substantially parallel" relates to a substantially parallel orientation of the rotational axes, wherein a deviation of a few degrees, e.g. up to 10° or even up to 15°, from an exact parallel orientation is still considered "substantially parallel". In some embodiments, the rotational axes of the two or more rolls may be substantially horizontally oriented rotational axes.

In some implementations, the two or more rolls may be cylindrical rolls. The term "cylinder" can be understood as commonly accepted as having a circular bottom shape and a circular upper shape and a curved surface area or shell connecting the upper circle and the lower circle. A cylinder axis of the cylindrical roll may define, or be, the rotational axis of this roll.

Typically, the rotational axes of the two or more rolls of the first lamination arrangement 130, such as the rotational axes of the first roll 130a and the second roll 130b, are substantially parallel to the support surface 112.

So, a modified article structure having the multilayered structure 30 arranged on the article structure 20 is provided, which moves as a continuous band along the transport path and reaches a delamination arrangement 120. The delamination arrangement 120 is configured for delaminating a protective layer off the article structure 20, such as the second protective layer 32 which was laminated together with the multilayered structure 30. The second protective layer 32 may cover the third layer 17 of the previously laminated multilayered structure 30, such as a silicone coating or silicone layer.

The delamination arrangement 120 includes one or more delamination rolls, such as a first delamination roll 120a and a second delamination roll 120b, configured for delaminating the protective layer 32 off the article structure 20 by applying a delamination force to the protective layer 32.

A further advantage of using at least one delamination roll 120a, 120b is that the multilayered structure 30 and the wound pack 13 are again pressed to each other and pressed onto the carrier 11. Thus, the adhesive forces are increased before applying the delamination force, to thereby provide a reliable contact between the layers 11, 12, 13, and 14. Furthermore, as the wound pack 13 is not coated at its upper surface with an acrylic adhesive layer, the adhesive force for attaching the multilayered structure 14 with its acrylic adhesive layer 15 onto the upper surface of the wound pack 13 is lower than between the acrylic adhesive layer 15 of the multilayered structure 14 and the acrylic adhesive layer 12 of the carrier 11. Thus, the pressing by the delamination roll of the layer 14 and the wound pack 13 onto each other and onto the carrier 11 directly before delaminating the protective layer 32 avoids additionally an unwanted delamination between the layers.

The delamination force has a first delamination force component in a vertical direction 1 and a second delamination force component in a horizontal direction 2. The first delamination force component may be smaller than a vertical force component generated by the conveyor device 110 and acting on the article structure 20 in a direction opposite to the first delamination force component. It is to be understood that these forces and force components act on a delamination point DP, at which the protective layer 32 detaches from the article structure 20.

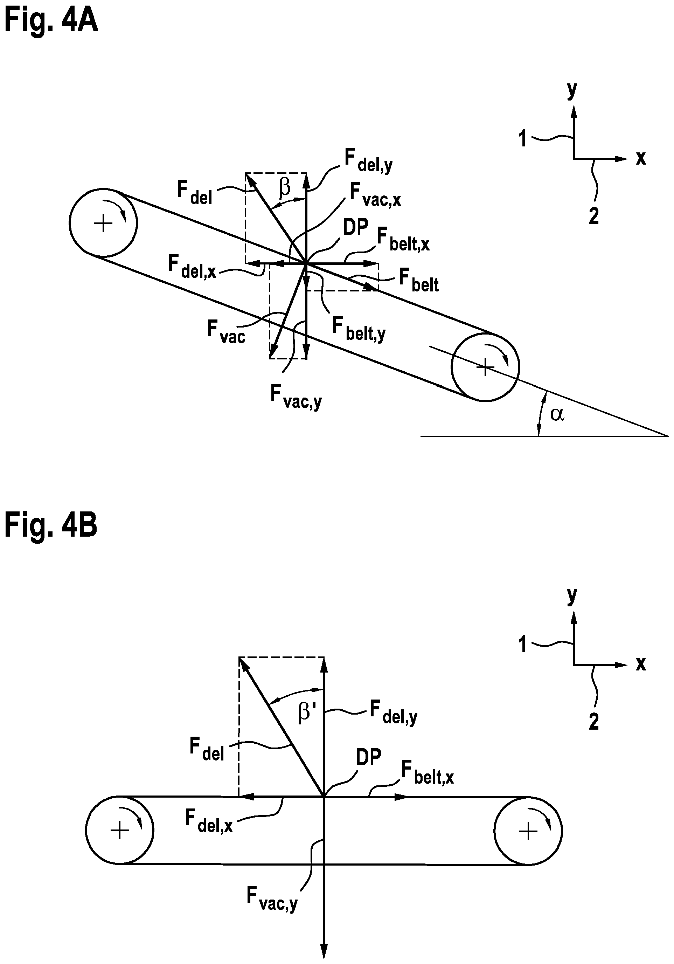

Accordingly, the delamination force generated by the delamination arrangement 120 is adjusted so that the article structure 20 adheres to the support surface 112 of the conveyor 110 and does not lift off. Furthermore, it has to be assured that the multilayered structure 14 laminated onto the article structure 20 is not lifted off during the delamination process of the protective layer 32. Therefore, the production speed and thus the yield of a manufacturing system can be increased. The delamination force and its adjustment are explained in detail with reference to FIGs. 4A and 4B and reference is made to this description for details.

According to some embodiments, which can be combined with other embodiments described herein, the support surface 112 is inclined with respect to the horizontal direction 2 by an inclination angle $\alpha$ to provide the adjustment of the delamination force generated by the delamination arrangement 120. In particular, the inclination angle $\alpha$ may be 45° or less and more than 0°. For example, the inclination angle $\alpha$ may be 40° or less, 35° or less, 30° or less, 25° or less, 20° or less, 15° or less, or 10° or less. In any case, the inclination angle $\alpha$ may be greater than 0°. In a particular embodiment, the inclination angle $\alpha$ may be about 17°.

In some embodiments, the one or more delamination rolls are two delamination rolls, such as the first delamination roll 120a and the second delamination roll 120b. The first delamination roll 120a and the second delamination roll 120b can be arranged so that the protective layer 32 removed from the article structure 20 can be guided between them away from the article structure 20.

For example, the first delamination roll 120a and the second delamination roll 120b may define a space or gap therebetween through which the protective layer 32 removed from the article structure 20 passes.

The first delamination roll 120a might be designated as bottom roller which could have a surface of rubber and/or foam to adapt to the thickness of the laminating surface of the article structure.

Preferably, the first delamination roll 120a and the second delamination roll 120b are arranged above each other in a direction substantially perpendicular to the support surface 112. The term "substantially perpendicular" relates to a substantially perpendicular orientation of a line on which the first delamination roll 120a and the second delamination roll 120b are arranged, wherein a deviation of a few degrees, e.g. up to 5° or even up to 10°, from an exact perpendicular orientation is still considered as "substantially perpendicular".

Each of the one or more delamination rolls, such as the first delamination roll 120a and the second delamination roll 120b, may have a respective rotational axis. The rotational axes of multiple delamination rolls may be substantially parallel to each other.

In some implementations, the one or more delamination rolls may be cylindrical delamination rolls. A cylinder axis of the cylindrical delamination roll may define, or be, the rotational axis of this delamination roll.

Typically, the rotational axes of the one or more delamination rolls, such as the rotational axes of the first delamination roll 120a and the second delamination roll 120b, are substantially parallel to the support surface 112.

According to some embodiments, which can be combined with other embodiments described herein, the apparatus 100 further includes a speed control arrangement 200 configured to control a moving speed of the delaminated protective layer 32. In particular, the speed control arrangement 200 may be arranged so as to receive the delaminated protective layer 32 from the delamination arrangement 120. For example, the delamination arrangement 120 may be arranged between the support surface 112 of the conveyor device 110 and the speed control arrangement 200 with respect to a transport path of the delaminated protective layer 32.

The speed control arrangement 200 may pull the delaminated protective layer 32 away from the delamination arrangement 120 and/or the support surface 112 by controlling the speed of the delaminated protective layer 32 in a defined manner or with a defined force, thereby assisting in providing the defined delamination force.

In some implementations, the speed control arrangement 200 includes a determination unit having a pair of fixed rolls 210a, 210b, such as a first fixed roll 210a and a second fixed roll 210b, and a moveable roll 212. The first fixed roll 210a, the second fixed roll 210b, and the moveable roll 212 are arranged in, or located on, a triangle and configured to guide the delaminated protective layer 32 coming from the conveyor device 110, in particular the delamination arrangement 120. For example, the delaminated protective layer 32 may first reach the first fixed roll 210a, move to the moveable roll 212, and then move to the second fixed roll 210b. Therefore, due to the triangular arrangement, the first fixed roll 210a, the moveable roll 212, and the second fixed roll 210b may act as divert rolls.

The fixed rolls 210a, 210b are fixed in position, in particular with respect to the delamination arrangement 120 and/or the conveyor device 110. The moveable roll 212 is moveable with respect to the fixed rolls 210a, 210b.

Each of the fixed rolls 210a, 210b and the moveable roll 212 has a respective rotational axis. The rotational axes of all rolls of the fixed rolls 210a, 210b and the moveable roll 212 may be substantially parallel to each other. The term "substantially parallel" relates to a substantially perpendicular orientation of the rotational axes, wherein a deviation of a few degrees, e.g. up to 10° or even up to 15°, from an exact parallel orientation is still considered "substantially parallel". In some embodiments, the rotational axes of all rolls of the fixed rolls 210a, 210b and the moveable roll 212 may be substantially horizontally oriented rotational axes.

In some implementations, the fixed rolls 210a, 210b and the moveable roll 212 may be cylindrical rolls. A cylinder axis of the cylindrical roll may define, or be, the rotational axis of this roll.

The pair of fixed rolls 210a, 210b and the moveable roll 212 are arranged in, or located on, a triangle. This means that each rotational axis corresponds to a respective corner of the triangle.

Preferably, the apparatus 100 is configured to perform a control of the speed of the delaminated protective layer 32 based on a position of the moveable roll 212. For example, if the moveable roll 212 moves towards the pair of fixed rolls 210a, 210b (upward in FIG. 2), it may be determined that the speed control arrangement 200 is pulling or moving the delaminated protective layer 32 to much. In this case, the speed of the delaminated protective layer 32 may be reduced. Likewise, if the moveable roll 212 moves away from the pair of fixed rolls 210a, 210b (downward in FIG. 2), it may be determined that the speed control arrangement 200 is not pulling or moving the delaminated protective layer 32 enough. In this case, the speed of the delaminated protective layer 32 may be increased.

The apparatus 100 may be configured to perform the control of the speed of the delaminated protective layer 32 such that the position of the moveable roll 212 corresponds to a reference position. In some exemplary embodiments, a PID control may be used to control the speed of the delaminated protective layer 32 such that the position of the moveable roll 212 corresponds to the reference position.

Because the moveable roll 212 can move in multiple directions, the moveable roll 212 (or the speed control arrangement 200 as a whole) can be referred to as "dancer".

In some embodiments, the moveable roll 212 is linearly moveable towards a center between the pair of fixed rolls 210, 210b. Alternatively, the moveable roll 212 is circularly moveable, e.g. with respect to a rotational center spaced apart from the moveable roll 212.

In a preferred configuration, the speed control arrangement 200 includes an encoder device 214 configured to determine the position of the moveable roll 212 by detecting a deflection of the moveable roll 212. In some embodiments, the moveable roll 212 is circularly moveable with respect to a rotational center defined by the encoder device 214, as it is illustrated in FIG. 2. In this case, the encoder device 214 may be a rotary encoder. The rotary encoder is an electro-mechanical device that converts the angular position or motion of the moveable roll 212 to an analog or digital output signal used to control the speed of the delaminated protective layer 32.

However, the present disclosure is not limited thereto and the encoder device 214 may be configured to determine the position of a linearly moving moveable roll 212. Even in this case, the encoder device 214 may be a rotary encoder. For example, the rotary encoder may be connected to the moveable roll 212 by means of an elastic element 215 which allows the linear movement of the moveable roll 212 and a rotation of the rotary encoder caused by the linear movement of the moveable roll 212.

According to some embodiments, the speed control arrangement 200 further includes a pair of driven rolls, such as a first driven roll 216a and a second driven roll 216b, configured to guide the delaminated protective layer 32 coming from the determination unit, in particular the second fixed roll 210b. For example, one or more actuators, such as one or more motors, can be provided to drive, i.e. rotate, the pair of driven rolls. In some implementations, the pair of driven rolls may be nip rolls.

The first driven roll 216a and the second driven roll 216b may define a space or gap therebetween through which the delaminated protective layer 32 coming from the determination unit passes. In particular, the delaminated protective layer 32 can be interposed between the first driven roll 216a and the second driven roll 216b such that a mechanical contact between the driven rolls and the delaminated protective layer 32 moves the delaminated protective layer 32 according to a rotation of the first driven roll 216a and the second driven roll 216b. Thereby, the first driven roll 216a and the second driven roll 216b can control the moving speed of the delaminated protective layer 32.

It is therefore understood that, when reference is made to "the moving speed of the delaminated protective layer", this may also refer to the rotational speed of the pair of driven rolls which causes the moving speed of the delaminated protective layer 32.

The rotational axes of the pair of driven rolls 216, 216b may be substantially parallel to the rotational axes of the pair of fixed rolls 210, 210b and the moveable roll 212. For example, the rotational axes of the pair of driven rolls 216, 216b may be substantially horizontally oriented rotational axes.

In some implementations, the first driven roll 216a and the second driven roll 216b may be cylindrical rolls. A cylinder axis of the cylindrical driven roll may define, or be, the rotational axis of this driven roll.

According to some embodiments, one or more guide rolls 150a, 150b can be provided between the delamination arrangement 120 and the speed control arrangement 200 to guide a movement of the delaminated protective layer 32 from the delamination arrangement 120 to the speed control arrangement 200.

According to some embodiments, which can be combined with other embodiments described herein, the apparatus 100 further includes a second lamination arrangement 140 configured for laminating at least one layer onto the article structure 20. In some implementations, the second lamination arrangement 140 may be arranged behind the delamination arrangement 120 with respect to the transport path of the article structure 20. In particular, the first lamination arrangement 130, the delamination arrangement 120 and the second lamination arrangement 140 may be sequentially arranged along the transport path of the article structure 20 and/or along the support surface 112 and/or above the support surface 112.

The second lamination arrangement 140 may include one or more lamination rolls, such as a first lamination roll 140a and a second lamination roll 140b. The first lamination roll 140a and the second lamination roll 140b may define a space or gap therebetween through which at least one layer 40 to be laminated onto the article structure 20 passes. For example, the at least one layer 40 to be laminated onto the article structure 20 may be a release liner. The release liner may be removable to expose e.g. a silicone layer of the wound care article before the wound care article is attached to a body.

Preferably, the first lamination roll 140a and the second lamination roll 140b are arranged above each other in a direction substantially perpendicular to the support surface 112. The term "substantially perpendicular" relates to a substantially perpendicular orientation e.g. of a line on which the first lamination roll 140a and the second lamination roll 140b are arranged, wherein a deviation of a few degrees, e.g. up to 5° or even up to 10°, from an exact perpendicular orientation is still considered as "substantially perpendicular".

Each of the one or more lamination rolls, such as the first lamination roll 140a and the second lamination roll 140b, may have a respective rotational axis. The rotational axes of multiple lamination rolls may be substantially parallel to each other. The term "substantially parallel" relates to a substantially parallel orientation of the rotational axes, wherein a deviation of a few degrees, e.g. up to 10° or even up to 15°, from an exact parallel orientation is still considered "substantially parallel". In some embodiments, the rotational axes of the one or more lamination rolls may be substantially horizontally oriented rotational axes.

In some implementations, the one or more lamination rolls may be cylindrical rolls. A cylinder axis of the cylindrical lamination roll may define, or be, the rotational axis of this lamination roll.

Typically, the rotational axis of the one or more lamination rolls, such as the rotational axes of the first lamination roll 140a and the second lamination roll 140b, are substantially parallel to the support surface 112.

According to some embodiments, which can be combined with other embodiments described herein, the apparatus 100 may include at least one separation device (not shown) configured to separate, e.g. cut, the article structure 20 into a plurality of articles. The at least one separation device may be arranged behind the conveyor device 110 with respect to the transport path of the article structure 20. In other embodiments, the at least one separation device is not included in the apparatus 100 and is provided as a separate entity.

According to some embodiments, which can be combined with other embodiments described herein, the articles are wound care articles, such as wound dressings or plasters.

Furthermore, there may be several rows of continuous bands of the article structure which is moved on the support surface of the conveyor. At least the lamination rolls 130a, 130b and lamination rolls 140a, 140b might be used for parallel delaminating or laminated of the several rows of continuous bands, respectively. Also, the delamination rolls 120a, 120b might be used for delaminating the protective layer from the several rows of continuous bands of the article structure. For independently controlling the speed of the delaminated protective layer there might be several speed control arrangements, each controlling the speed of the delaminated protective layer for a single row of the continuous band of the article structure.

FIG. 4A shows forces in an apparatus for removing at least one layer from an article structure according to embodiments described herein. In the example of FIG. 4A, the support surface is inclined with respect to the horizontal direction by an inclination angle $\alpha$.

Generally, the term "vertical direction" or "vertical orientation" is understood to distinguish over "horizontal direction" or "horizontal orientation". That is, the vertical direction 1 or vertical orientation relates to a vertical orientation of the forces or force components. The horizontal direction 2 is perpendicular to the vertical direction 1. The vertical direction 1 is parallel to the force of gravity.

The following forces may act on a given point (i.e., the delamination point DP) of the article structure:

- delamination force $F_{del}$: exerted by the delamination arrangement;
- belt force $F_{belt}$: exerted by the support surface (belt) and its movement; and
- holding force $F_{vac}$: exerted by the suction mechanism configured to hold the article structure at the support surface.

These forces act on the delamination point DP, at which the protective layer detaches from the article structure.

Each force can be presented by a vector, wherein each vector is composed of a horizontal component (index "x") and a vertical component (index "y"). The vectors and their respective components are shown in FIG. 4A.

In detail, the delamination force $F_{del}$ has a first delamination force component $F_{del,y}$ in the vertical direction 1 and a second delamination force component $F_{del,x}$ in the horizontal direction 2. The belt force $F_{belt}$ has a vertical force component $F_{belt,y}$ and a horizontal force component $F_{belt,x}$. The holding force (e.g. suction force) $F_{vac}$ has a vertical force component $F_{vac,y}$ and a horizontal force component $F_{vac,x}$.

The sum of the horizontal force components acting on the article structure at the delamination point DP is thus given as:

$$\sum F_x = F_{belt,x} - F_{vac,x} - F_{del,x} \qquad (1)$$

The sum of the vertical force components acting on the article structure at the delamination point DP is given as:

$$\sum F_y = F_{del,y} - F_{belt,y} - F_{vac,y} \qquad (2)$$

According to the embodiments of the present disclosure, the first delamination force component $F_{del,y}$ is smaller than a vertical force component generated by the conveyor device (in the present example the sum of $F_{belt,y}$ and $F_{vac,y}$) and acting on the article structure 2 in a direction opposite to the first delamination force component $F_{del,y}$.

In the present example, this condition can be expressed as follows:

$$|F_{del,y}| < |F_{belt,y}| + |F_{vac,y}| \qquad (3)$$

Such an adjustment of the delamination force to satisfy the above conditions ensures that the article structure adheres to the support surface of the conveyor and does not lift off. Accordingly, the production speed and thus the yield of a manufacturing system can be increased.

The adjustment of the delamination force may be achieved by adjusting a delamination angle $\beta$ defined between a direction or vector of the delamination force $F_{del}$ and its first delamination force component (vector component) $F_{del,y}$. In some embodiments, the delamination angle $\beta$ may be 10° or higher and/or less than 90°. For example, the delamination angle is 15° or higher, 20° or higher, 25° or higher, 30° or higher, 35° or higher, 40° or higher, or 45° or higher. In any case, the delamination angle may be less than 90°.

In order to adjust the delamination force and/or the delamination angle $\beta$, the inclination angle $\alpha$ of the support surface with respect to the horizontal direction 1 may be adjusted. In some embodiments, in order to satisfy the above condition (3), the inclination angle may be 45° or less and more than 0°. For example, the inclination angle may be 40° or less, 35° or less, 30° or less, 25° or less, 20° or less, 15° or less, or 10° or less. In any case, the inclination angle $\alpha$ may be greater than 0°. In a particular embodiment, the inclination angle $\alpha$ may be about 17°.

FIG. 4B shows forces in an apparatus for removing at least one layer from an article structure according to further embodiments described herein. In the example of FIG. 4B, the support surface is horizontally oriented, i.e., not inclined. Thus, the holding force $F_{vac}$ has only a vertical component $F_{vac,y}$, and the belt force $F_{belt}$ only has a horizontal component $F_{del,x}$.

In this case, the delamination angle $\beta$ may be adjusted by adjusting a direction of the vector of the delamination force $F_{del}$. The direction of the vector of the delamination force $F_{del}$ can be adjusted by a geometrical configuration and/or arrangement of the delamination arrangement with respect to the support surface of the conveyor device.

In view of the above, the embodiments of the present disclosure adjust a delamination force used to peel a temporary protective layer from the article structure. In particular, the delamination force is adjusted so that the article structure adheres to the support surface of the conveyor and does not lift off. Accordingly, the production speed and thus the yield of a manufacturing system can be increased.

While the foregoing is directed to embodiments of the disclosure, other and further embodiments of the disclosure may be devised without departing from the basic scope thereof, and the scope thereof is determined by the claims that follow.

## Claims

1. Apparatus (100) for removing at least one layer from an article structure (20), comprising:

a conveyor device (110) having a support surface (112) configured for supporting the article structure (20); and
a delamination arrangement (130) including one or more delamination rolls (120a, 120b) configured for delaminating a protective layer (32) off the article structure (20) by applying a delamination force ($F_{del}$) to the protective layer (32), wherein the delamination force ($F_{del}$) has a first delamination force component ($F_{del,y}$) in a vertical direction (1) and a second delamination force component ($F_{del,x}$) in a horizontal direction (2), and wherein the first delamination force component ($F_{del,y}$) is smaller than a vertical force component ($F_{belt,y}$; $F_{vac,y}$) generated by the conveyor device (110) and acting on the article structure (2) in a direction opposite to the first delamination force component ($F_{del,y}$).

2. The apparatus (100) of claim 1, wherein a delamination angle ($\beta$) defined between a direction of the delamination force ($F_{del}$) and the first delamination force component ($F_{del,y}$) is 10° or higher and less than 90°.

3. The apparatus (100) of claim 1 or 2, wherein the support surface (112) is inclined with respect to the horizontal direction (2) by an inclination angle ($\alpha$) to provide the first delamination force component ($F_{del,y}$) that is smaller than the vertical force component ($F_{belt,y}$; $F_{vac,y}$) generated by the conveyor device (110).

4. The apparatus (100) of any one of the preceding claims, wherein the conveyor device (110) includes a suction mechanism configured to hold the article structure (20) at the support surface (112) by means of a suction force ($F_{vac}$).

5. The apparatus (100) of claim 4, wherein the vertical force component ($F_{belt,y}$; $F_{vac,y}$) of the conveyor device (110) includes a vertical component ($F_{vac,y}$) of the suction force ($F_{vac}$).

6. The apparatus (100) of any one of the preceding claims, wherein the one or more delamination rolls (120a, 120b) are two delamination rolls arranged so that the protective layer (32) removed from the article structure (20) is guided between them.

7. The apparatus (100) of claim 6, wherein the two delamination rolls (120a, 120b) are arranged above each other in a direction substantially perpendicular to the support surface (112).

8. The apparatus (100) of any one of the preceding claims, further including a speed control arrangement (200) configured to control a moving speed of the delaminated protective layer (32).

9. The apparatus (100) of claim 8, wherein the speed control arrangement (200) includes a determination unit having a pair of fixed rolls (210a, 210b) and a moveable roll (212) and configured to guide the delaminated protective layer (32) coming from the conveyor device (110), and wherein the apparatus (100) is configured to perform a control of the speed of the delaminated protective layer (32) based on a position of the moveable roll (212).

10. The apparatus of (100) claim 9,
    wherein the moveable roll (212) is linearly moveable towards the pair of fixed rolls (210a, 210b), or wherein the moveable roll (212) is circularly moveable.

11. The apparatus (100) of claim 9 or 10, wherein the speed control arrangement (200) includes an encoder device (214) configured to determine the position of the moveable roll (212).

12. The apparatus (100) of any one of claims 8 to 11, the speed control arrangement (200) further including a pair of driven rolls (216a, 216b) configured to guide the delaminated protective layer (32) coming from the determination unit, wherein the pair of driven rolls (216a, 216b) is configured to control the moving speed of the delaminated protective layer (32).

13. The apparatus (100) of any one of the preceding claims, further including at least one of:

    a first lamination arrangement (130) configured for laminating a multilayered structure (30) onto the article structure (20), preferably the first lamination arrangement (130) is further configured for delaminating at least one protective layer (31) off the multilayered structure (30) before the multilayered structure (30) is laminated onto the article structure (20); and/or
    a second lamination arrangement (140) configured for laminating at least one layer (40) onto the article structure (20) after the protective layer (32) has been delaminated off the article structure (20) by means of the delamination arrangement (120); and/or
    at least one separation device configured to separate the article structure (20) into a plurality of articles, in particular wound care articles.

14. The apparatus (100) of any one of the preceding claims, wherein the conveyor device (110) is a belt conveyor.

15. Method for removing at least one layer from an article structure, comprising:

applying a delamination force to a protective layer of the article structure using one or more delamination rolls while the article structure is supported on a support surface of a conveyor device,
wherein the delamination force ($F_{del}$) has a first delamination force component ($F_{del,y}$) in a vertical direction (y) and a second delamination force component ($F_{del,x}$) in a horizontal direction (x), and wherein the first delamination force component ($F_{del,y}$) is smaller than a vertical force component ($F_{belt,y}$; $F_{vac,y}$) generated by the conveyor device and acting on the article structure in a direction opposite to the first delamination force component ($F_{del,y}$).

**Fig. 1A**

**Fig. 1B**

**Fig. 1C**

**Fig. 2**

EP 4 046 798 A1

**Fig. 3**

## Fig. 4A

## Fig. 4B

Europäisches
Patentamt

European
Patent Office

Office européen
des brevets

**EUROPEAN SEARCH REPORT**

Application Number

EP 21 15 8142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IT 2018 0000 9348 A1 (CEFLA SOCIETA' COOP [IT]) 11 April 2020 (2020-04-11) | 1-8, 12-15 | INV. B32B43/00 B32B38/10 B32B38/18 |
| A | * paragraph [0028] - paragraph [0055] * <br> * figures 2, 3, 6, 8, 9 * | 9-11 | |
| X | WO 2018/007960 A1 (CEFLA SOCIETA' COOP [IT]) 11 January 2018 (2018-01-11) | 1-8, 12-15 | |
| A | * paragraphs [0025], [0029] * <br> * figures 2, 4-4D * | 9-11 | |

TECHNICAL FIELDS
SEARCHED    (IPC)

B32B

The present search report has been drawn up for all claims

| Place of search | Date of completion of the search | Examiner |
|---|---|---|
| Munich | 12 July 2021 | Bataille, Laurent |

EPO FORM 1503 03.82 (P04C01)

## ANNEX TO THE EUROPEAN SEARCH REPORT
## ON EUROPEAN PATENT APPLICATION NO.

EP 21 15 8142

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2021

| Patent document cited in search report | Publication date | Patent family member(s) | | Publication date |
|---|---|---|---|---|
| IT 201800009348 A1 | 11-04-2020 | ----------------------------------- | | |
| WO 2018007960 A1 | 11-01-2018 | EP | 3481633 A1 | 15-05-2019 |
| | | WO | 2018007960 A1 | 11-01-2018 |

EPO FORM P0459

For more details about this annex : see Official Journal of the European Patent Office, No. 12/82